# EUROPÄISCHE PATENTANMELDUNG

(11) **EP 2 832 735 A1**
(43) Veröffentlichungstag der Anmeldung: **04.02.2015**
(21) Anmeldenummer: 13178563.6
(22) Anmeldetag: 30.07.2013
(51) Int. Cl.: C07F 7/18, C08G 18/12, C08G 63/00

(54) **Hydroxymethylcarboxamido-substituiertes Silanol für härtbare, silanterminierte Polymere.**

(71) Anmelder: Sika Technology AG, 6340 Baar (CH)
(72) Erfinder: Kramer, Andreas, 8006 Zürich (CH); Burckhardt, Urs, 8049 Zürich (CH); Stadelmann, Ursula, 8046 Zürich (CH)
(74) Vertreter: Sika Patent Attorneys

(57) **Zusammenfassung**

Die vorliegende Erfindung betrifft spezielle Hydroxysilane der Formel (I), ein Verfahren zu deren Herstellung und ihre Verwendung als Bestandteil von feuchtigkeitshärtenden Zusammensetzungen, sowie daraus hergestellte silanfunktionelle Verbindungen, insbesondere silanfunktionelle Polymere und Isocyanatosilane. Die Hydroxysilane sind in einem einfachen Prozess in hoher Reinheit herstellbar und sind nach der Herstellung lagerstabil. Insbesondere die Herstellung aus der Umsetzung von Lactiden mit Aminosilanen ist besonders vorteilhaft.
Hydroxysilan der Formel (I), 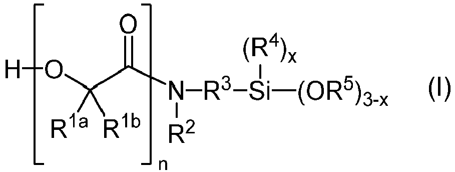 wobei
n für 1 oder 2 steht.
Die anderen Variablen sind wie in den Ansprüchen definiert.

## Beschreibung

### Technisches Gebiet

Die Erfindung betrifft Hydroxysilane und deren Verwendung.

### Stand der Technik

Organosilane mit einer zusätzlichen funktionellen Gruppe werden oft in Dichtstoffen, Klebstoffen, Beschichtungen und Vorbehandlungsmitteln wie Primern oder Aktivatoren eingesetzt. Sie dienen unter anderem als Haftvermittler oder Vernetzer, sowie als Aufbaukomponenten zur Herstellung von Silangruppenhaltigen Verbindungen. Bedeutsam sind insbesondere Silangruppen-haltige Polymere, auch als "silanfunktionelle Polymere" oder "silanmodifizierte Polymere" (SMP) oder "silanterminierte Polymere" (STP) bezeichnet, welche mittels Feuchtigkeit vernetzungsfähig sind und in härtbaren Zusammensetzungen als Bindemittel dienen.

Typische Organosilane, die sich mit Isocyanaten auf einfache Weise zu silanfunktionellen Verbindungen umsetzen lassen, sind Mercaptosilane und Aminosilane. Diese weisen aber Nachteile auf. Mercaptosilane haben einen unangenehmen Geruch und bilden mit Isocyanaten thermisch nicht sehr beständige Thiourethane, welche bei erhöhter Temperatur leicht rückspaltbar sind. Aminosilane sind basisch und bilden mit Isocyanaten Harnstoffe, welche oft eine sehr hohe Viskosität oder eine eingeschränkte Wärmebeständigkeit haben.

Aus dem Stand der Technik wenig bekannt sind Hydroxysilane. Deren Handhabung weist die Schwierigkeit auf, dass sie aufgrund einer schnellen Reaktion der Hydroxylgruppe mit der Silangruppe zur Selbstkondensation neigen und deshalb häufig sehr unrein und/oder wenig lagerstabil sind. Zur Umsetzung mit Isocyanaten wären Hydroxysilane aber interessant, da die dabei entstehenden Urethane thermisch relativ stabil sind und eine moderate Viskosität aufweisen. Aus US 5,587,502 sind Hydroxycarbamoylsilane bekannt. Die beschriebenen Hydroxysilane weisen aber eine zu geringe Reinheit auf, um zur Herstellung von silanfunktionellen Polymeren wirklich interessant zu sein, und ihre Hydroxylgruppe ist nicht sehr reaktiv.

### Darstellung der Erfindung

Aufgabe der vorliegenden Erfindung ist es daher, ein Hydroxysilan bereitzustellen, das in einem einfachen Verfahren in hoher Reinheit herstellbar ist, eine gute Lagerstabilität aufweist und geeignet ist zur Herstellung von silanfunktionellen Verbindungen.

Überraschenderweise wurde gefunden, dass ein Hydroxysilan nach Anspruch 1 diese Aufgabe löst. Das Hydroxysilan nach Anspruch 1 ist in einem einfachen Verfahren aus kommerziell gut erhältlichen Rohstoffen in hoher Reinheit herstellbar. Es weist eine Hydroxylgruppe von hoher Reaktivität und eine gute Lagerstabilität auf.

Das Hydroxysilan nach Anspruch 1 kann vorteilhaft verwendet werden als Bestandteil einer härtbaren Zusammensetzung, insbesondere eines Aktivators, eines Primers, eines Kleb- oder Dichtstoffs oder einer Beschichtung, wo es als Haftvermittler und/oder Vernetzer wirken kann, ohne die Nachteile von Mercapto- oder Aminosilanen wie unangenehme Gerüche oder starke Basizität aufzuweisen. Besonders vorteilhaft kann es verwendet werden zur Herstellung von silanfunktionellen Verbindungen, insbesondere indem es mit Isocyanaten umgesetzt wird. Solche silanfunktionelle Verbindungen können auf die gleiche Weise wie das Hydroxysilan selber verwendet werden. Zusätzlich sind sie als feuchtigkeitshärtendes Bindemittel in härtbaren Zusammensetzungen verwendbar.

Besonders vorteilhafte Eigenschaften weisen silanfunktionelle Polymere aus der Umsetzung eines Hydroxysilans der Formel (I) mit isocyanatfunktionellen Polyurethanpolymeren auf. Die so erhaltenen Polymere härten mit Feuchtigkeit schnell zu elastischen Materialien von hoher Festigkeit, Elastizität und Wärmebeständigkeit aus und haften gut auf einer Vielzahl von Untergründen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Hydroxysilan der Formel (I), 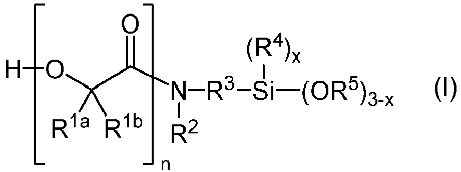 wobei
R^{1a} und R^{1b} unabhängig voneinander jeweils für ein Wasserstoffatom oder einen einwertigen Kohlenwasserstoffrest mit 1 bis 12 C-Atomen, oder zusammen für einen Alkylenrest mit 2 bis 6 C-Atomen, stehen;
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht; R⁴ für einen Alkylrest mit 1 bis 8 C-Atomen steht;
R⁵ für einen Alkylrest mit 1 bis 10 C-Atomen, der gegebenenfalls Ethergruppen enthält, steht;
n für 1 oder 2 steht; und
x für 0, 1 oder 2 steht.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Alkoxysilan" oder kurz "Silan" eine organische Verbindung, welche mindestens eine Silangruppe aufweist.

Als "Hydroxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyolen mit einem Überschuss an Polyisocyanaten erhältlich sind und selber Polyisocyanate darstellen und oft auch Prepolymere genannt werden.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Eine gestrichelte Linie in den Formeln in diesem Dokument stellt jeweils die Bindung zwischen einem Substituenten und dem zugehörigen Molekülrest dar. Als "lagerstabil" wird eine Substanz oder eine Zusammensetzung bezeichnet, wenn sie bei Raumtemperatur in einem geeigneten Gebinde während längerer Zeit, typischerweise während mehreren Wochen bis zu 3 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von ca. 23 °C bezeichnet.

Hydroxysilane der Formel (I), bei welchen R^{1a} und R^{1b} für unterschiedliche Substituenten stehen, sind chirale Verbindungen, welche isomerenrein oder als Isomerengemische vorliegen können.

Bevorzugt stehen R^{1a} und R^{1b} jeweils nicht für einen tertiären Alkylrest wie beispielsweise tert-Butyl. Ein tertiärer Alkylrest bewirkt eine starke sterische Hinderung der Hydroxylgruppe, was für die Verwendung des Hydroxysilans nachteilig sein kann.

R^{1a} steht bevorzugt für ein Wasserstoffatom oder einen einwertigen Kohlenwasserstoffrest mit 1 bis 6 C-Atomen, welcher nicht über ein tertiäres C-Atom angebunden ist, insbesondere für Wasserstoff, Methyl, Ethyl, n-Propyl, Isopropyl, Butyl, sec-Butyl, Cyclopentyl, Cyclohexyl oder Phenyl. Ein solches Hydroxysilan verfügt über eine Hydroxylgruppe mit guter Reaktivität.

R^{1a} steht besonders bevorzugt für ein Wasserstoffatom oder einen einwertigen Kohlenwasserstoffrest mit 1 bis 6 C-Atomen, welcher über ein primäres C-Atom gebunden ist, insbesondere für Wasserstoff, Methyl, Ethyl, n-Propyl, Butyl oder sec-Butyl. Ein solches Hydroxysilan verfügt über eine Hydroxylgruppe mit sehr guter Reaktivität.

R^{1a} steht insbesondere für ein Wasserstoffatom oder einen Methylrest, am meisten bevorzugt für einen Methylrest.

Ein Substituent R^{1a} in Form von Methyl ist dahingehend von Vorteil, dass solche Hydroxysilane einfach zugänglich und gut lagerstabil sind und die Hydroxylgruppe von hoher Reaktivität ist.

Ein Substituent R^{1a} in Form von Wasserstoff ist dahingehend von Vorteil, dass die Hydroxylgruppe besonders reaktiv ist, was vorteilhaft sein kann, wenn das Hydroxysilan nicht allzu lange gelagert werden soll.

R^{1b} steht besonders bevorzugt für ein Wasserstoffatom oder einen Methylrest, insbesondere für ein Wasserstoffatom.

Besonders bevorzugt stehen R^{1a} und R^{1b} unabhängig voneinander jeweils für ein Wasserstoffatom oder einen Methylrest. Ein solches Hydroxysilan weist eine besonders reaktive Hydroxylgruppe auf und ist sehr lagerstabil.

Am meisten bevorzugt steht R^{1a} für einen Methylrest und R^{1b} für ein Wasserstoffatom. Ein solches Hydroxysilan ist besonders einfach zugänglich, ausgezeichnet lagerstabil und die Hydroxylgruppe ist von sehr hoher Reaktivität.

R² steht bevorzugt für ein Wasserstoffatom oder einen Alkylrest oder einen Cycloalkylrest oder einen Alkoxysilylalkylrest. Ein solches Hydroxysilan ist besonders einfach zugänglich.

R² steht besonders bevorzugt für ein Wasserstoffatom. Ein solches Hydroxysilan ist besonders gut herstellbar.

R² steht weiterhin besonders bevorzugt für einen Alkoxysilylalkylrest, insbesondere für Trimethoxysilylpropyl oder für Triethoxysilylpropyl. Ein solches Hydroxysilan der Formel (I) ermöglicht besonders gute Haftungseigenschaften.

R³ steht bevorzugt für einen linearen oder verzweigten Alkylenrest mit 1 bis 6 C-Atomen, gegebenenfalls mit einem Stickstoffatom.

Besonders bevorzugt ist der Rest R³ ausgewählt aus der Gruppe bestehend aus 1,3-Propylen, 4-Aza-1,6-hexylen, 2-Methyl-1,3-propylen, 1,4-Butylen, 3-Methyl-1,4-butylen und 3,3-Dimethyl-1,4-butylen. Davon besonders bevorzugt sind 1,3-Propylen und 3,3-Dimethyl-1,4-butylen, insbesondere 1,3-Propylen. Die Stellung der Substituenten bzw. Heteroatome in den Resten R³ ist ausgehend vom Siliciumatom nummeriert.

Ein solches Hydroxysilan der Formel (I) ist besonders gut zugänglich.

R⁴ steht bevorzugt für einen Methylrest.

R⁵ steht bevorzugt für einen Methylrest oder Ethylrest, am meisten bevorzugt für einen Ethylrest.

Ein Hydroxysilan der Formel (I) mit Methoxygruppen weist den Vorteil auf, dass seine Silangruppen besonders reaktiv sind.

Ein Hydroxysilan der Formel (I) mit Ethoxygruppen weist den Vorteil auf, dass es besonders lagerstabil ist und dass bei seiner Hydrolyse das wenig toxische Ethanol freigesetzt wird.

n steht bevorzugt für 1. Ein solches Hydroxysilan ist frei von Estergruppen. Es kann mit bei der Silanhydrolyse freigesetztem Alkohol nicht umestern, wodurch es besonders lagerstabil ist.

x steht bevorzugt für 0 oder 1, insbesondere für 0. Ein solches Hydroxysilan weist besonders reaktive Silangruppen auf.

Bevorzugt ist das Hydroxysilan der Formel (I) ausgewählt aus der Gruppe bestehend aus N-(3-Triethoxysilylpropyl)-2-hydroxyacetamid, N-(3-Trimethoxysilylpropyl)-2-hydroxyacetamid, N-(3-Diethoxymethylsilylpropyl)-2-hydroxyacetamid, N-(3-Dimethoxymethylsilylpropyl)-2-hydroxyacetamid, N-(3-Triethoxysilylpropyl)-2-hydroxypropanamid, N-(3-Trimethoxysilylpropyl)-2-hydroxypropanamid, N-(3-Diethoxymethylsilylpropyl)-2-hydroxypropanamid, N-(3-Dimethoxymethylsilylpropyl)-2-hydroxypropanamid, N-(3-Triethoxysilylpropyl)-2-hydroxy-2-methylpropanamid, N-(3-Trimethoxysilylpropyl)-2-hydroxy-2-methylpropanamid, N-(3-Diethoxymethylsilylpropyl)-2-hydroxy-2-methylpropanamid und N-(3-Dimethoxymethylsilylpropyl)-2-hydroxy-2-methylpropanamid. Diese Hydroxysilane sind einfach zugänglich und ihre Hydroxylgruppe ist von sehr guter Reaktivität.

Davon bevorzugt sind die Trialkoxysilane, insbesondere die Triethoxysilane. Besonders bevorzugt sind N-(3-Trimethoxysilylpropyl)-2-hydroxypropanamid und N-(3-Triethoxysilylpropyl)-2-hydroxypropanamid.

Am meisten bevorzugt ist N-(3-Triethoxysilylpropyl)-2-hydroxypropanamid. Es ist besonders lagerstabil und bei seiner Hydrolyse wird Ethanol freigesetzt, was aus toxikologischen Gründen vorteilhaft sein kann.

Ein weiterer Gegenstand der Erfindung ist ein Verfahren zur Herstellung eines Hydroxysilans der Formel (I) durch Umsetzung von
- mindestens einem Lactid der Formel (II) oder mindestens einem Hydroxyester der Formel (III), mit
- mindestens einem Aminosilan der Formel (IV).

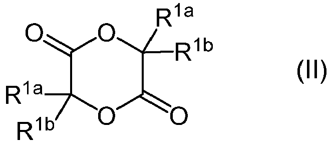

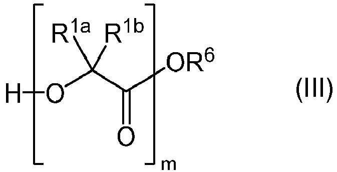

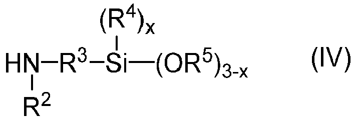

In den Formeln (II), (III) und (IV) stehen
m für eine ganze Zahl von 1 bis 100;
R⁶ für einen einwertigen Kohlenwasserstoffrest mit 1 bis 12 C-Atomen; und R^{1a}, R^{1b}, R², R³, R⁴, R⁵ und x weisen die bereits genannten Bedeutungen auf.

Im Fall eines Lactids der Formel (II) wird diese Umsetzung bevorzugt unter Feuchtigkeitsausschluss bei einer Temperatur im Bereich von 15 bis 120 °C, insbesondere 20 bis 90 °C, durchgeführt, gegebenenfalls in Anwesenheit eines Katalysators und/oder eines Trocknungsmittels wie insbesondere Vinyltriethoxysilan, Tetraethoxysilan, Vinyltrimethoxysilan oder ein Molekularsieb. Es werden bevorzugt ungefähr zwei Mol Aminosilan pro Mol Lactid eingesetzt. Auf diese Weise entstehen hauptsächlich Hydroxysilane der Formel (I) mit n = 1. Es kann aber auch ungefähr ein Mol Aminosilan pro Mol Lactid eingesetzt werden, wobei hauptsächlich Hydroxysilane der Formel (I) mit n = 2 entstehen. Bevorzugt wird mit einem Aminosilan/Lactid-Verhältnis im Bereich von 1.8 bis 2.2 gearbeitet. Die Umsetzung kann lösemittelfrei oder in einem geeigneten Lösemittel erfolgen. Nach der Umsetzung können allfällig vorhandene flüchtige Verbindungen, insbesondere Lösemittel, unreagierte Edukte oder freigesetzter Alkohol, destillativ aus dem Reaktionsprodukt entfernt werden.

Im Fall eines Hydroxyesters der Formel (III) wird diese Umsetzung bevorzugt unter Feuchtigkeitsausschluss bei einer Temperatur im Bereich von 40 bis 150 °C, gegebenenfalls in Anwesenheit eines Trocknungsmittels wie insbesondere Vinyltriethoxysilan, Tetraethoxysilan, Vinyltrimethoxysilan oder ein Molekularsieb. Bei dieser Umsetzung wird bevorzugt ein Katalysator eingesetzt, insbesondere eine Metallverbindung, insbesondere ein Titanat, ein Stannat oder ein Aluminat. Es wird bevorzugt ungefähr ein Mol Aminosilan der Formel (IV) pro Estergruppe des Hydroxyesters der Formel (III) eingesetzt. Ein Hydroxyester der Formel (III), bei welchem m für 1 steht, wird also bevorzugt ungefähr im Molverhältnis 1:1 mit dem Aminosilan umgesetzt. Ein polymerer Hydroxyester, bei welchem beispielsweise m für 10 steht, wird dementsprechend bevorzugt ungefähr im Molverhältnis 1:10 mit dem Aminosilan umgesetzt. Auf diese Weise entstehen hauptsächlich Hydroxysilane der Formel (I), bei welchen n für 1 steht. Bevorzugt wird mit einem Aminosilan/Hydroxyester-Verhältnis im Bereich von (0.8 bis 1.2)m gearbeitet. Die Umsetzung kann lösemittelfrei oder in einem geeigneten Lösemittel erfolgen. Bevorzugt wird nach der Umsetzung der freigesetzte Alkohol, zusammen mit allfällig vorhandenen weiteren flüchtigen Verbindungen, insbesondere Lösemittel oder unreagierte Edukte, destillativ aus dem Reaktionsprodukt entfernt.

Als Lactid der Formel (II) geeignet sind insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure). Diese Lactide sind besonders gut zugänglich.
Bevorzugt sind 1,4-Dioxan-2,5-dion und 3,6-Dimethyl-1,4-dioxan-2,5-dion. Aus diesen Lactiden sind Hydroxysilane mit guter Lagerstabilität und einer sehr reaktiven Hydroxylgruppe erhältlich.
Besonders bevorzugt ist 3,6-Dimethyl-1,4-dioxan-2,5-dion. Aus diesem Lactid sind Hydroxysilane mit einer besonders guten Lagerstabilität und einer sehr reaktiven Hydroxylgruppe erhältlich. Insbesondere das Lactid aus L-Milchsäure, auch L-Lactid oder (3S,6S)-3,6-Dimethyl-1,4-dioxan-2,5-dion genannt, ist besonders gut zugänglich, und es handelt sich dabei um einen nachwachsenden Rohstoff.

Als Hydroxyester der Formel (III) geeignet sind insbesondere die Methylester, Ethylester, Isopropylester, n-Propylester, tert-Butylester, n-Butylester und sec-Butylester von 2-Hydroxyessigsäure, 2-Hydroxypropionsäure (Milchsäure), 2-Hydroxybuttersäure, 2-Hydroxy-2-methylpropionsäure (2-Hydroxyisobuttersäure), 2-Hydroxypentansäure, 2-Hydroxy-3-methylbuttersäure, 2-Hydroxyhexansäure, 2-Hydroxy-4-methylpentansäure, 2-Hydroxy-2-cyclohexylessigsäure (Hexahydromandelsäure), 2-Hydroxy-2-phenylessigsäure (Mandelsäure), 2-Hydroxy-2-cyclopentylessigsäure und 2-Hydroxy-2-cyclohexylessigsäure, sowie oligomere Formen dieser Hydroxyester, also Verbindungen der Formel (III) mit m > 1.

Bevorzugt sind die Methylester und die Ethylester von 2-Hydroxyessigsäure, Milchsäure, 2-Hydroxyisobuttersäure und oligomere Formen dieser Hydroxyester. Dabei sind die Methylester bevorzugt für die Umsetzung mit Aminosilanen mit Methoxygruppen und die Ethylester bevorzugt zur Umsetzung mit Aminosilanen mit Ethoxygruppen.

Besonders bevorzugt sind Milchsäuremethylester und Milchsäureethylester und oligomere Formen davon, insbesondere L-Milchsäuremethylester und L-Milchsäureethylester. Bei den L-Milchsäureestern handelt es sich um nachwachsende Rohstoffe. Am meisten bevorzugt ist L-Milchsäureethylester.

Als Aminosilan der Formel (IV) geeignet sind insbesondere Aminosilane mit einer primären Aminogruppe, insbesondere 3-Aminopropyltriethoxysilan, 3-Aminopropyltrimethoxysilan, 3-Aminopropyldiethoxymethylsilan, 3-Aminopropyldimethoxymethylsilan, N-Aminoethyl-3-aminopropyltriethoxysilan, N-Aminoethyl-3-aminopropyltrimethoxysilan, N-Aminoethyl-3-aminopropyldiethoxymethylsilan, N-Aminoethyl-3-aminopropyldimethoxymethylsilan, 4-Aminobutyltriethoxysilan, 4-Aminobutyltrimethoxysilan, 4-Aminobutyldiethoxymethylsilan, 4-Aminobutyldimethoxymethylsilan,4-Amino-3-methylbutyltriethoxysilan, 4-Amino-3-methylbutyltrimethoxysilan, 4-Amino-3-methylbutyldiethoxymethylsilan, 4-Amino-3-methylbutyldimethoxymethylsilan, 4-Amino-3,3-dimethylbutyltriethoxysilan, 4-Amino-3,3-dimethylbutyltrimethoxysilan, 4-Amino-3,3-dimethylbutyldiethoxymethylsilan, 4-Amino-3,3-dimethylbutyldimethoxymethylsilan, Aminomethyltriethoxysilan, Aminomethyltrimethoxysilan, Aminomethyldiethoxymethylsilan und Aminomethyldimethoxymethylsilan.

Davon bevorzugt sind 3-Aminopropyltriethoxysilan, 3-Aminopropyltrimethoxysilan, 3-Aminopropyldiethoxymethylsilan, 3-Aminopropyldimethoxymethylsilan, 4-Amino-3,3-dimethylbutyltriethoxysilan, 4-Amino-3,3-dimethylbutyltrimethoxysilan, 4-Amino-3,3-dimethylbutyldiethoxymethylsilan und 4-Amino-3,3-dimethylbutyldimethoxymethylsilan.

Besonders bevorzugt sind 3-Aminopropyltriethoxysilan und 3-Aminopropyltrimethoxysilan, insbesondere 3-Aminopropyltriethoxysilan.

Als Aminosilan der Formel (IV) weiterhin geeignet sind Aminosilane mit einer sekundären Aminogruppe, insbesondere Bis(trimethoxysilylpropyl)amin, Bis-(triethoxysilylpropyl)amin, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-Ethyl-3-amino-2-methylpropyltrimethoxysilan, N-Ethyl-3-amino-2-methylpropyltriethoxysilan, N-(3-Trimethoxysilylpropyl)-amino-bernsteinsäurediethylester, N-(3-Triethoxysilylpropyl)-amino-bernsteinsäurediethylester, N-Cyclohexyl-aminomethyltriethoxysilan und N-Cyclohexyl-aminomethyltrimethoxysilan.

Bevorzugt wird das Verfahren zur Herstellung eines Hydroxysilans der Formel (I) mit mindestens einem Lactid der Formel (II) durchgeführt. Diese Umsetzung kann auf besonders einfache Weise bei besonders milden Bedingungen durchgeführt werden. Es ist sogar möglich, die Umsetzung ohne Katalysatoren bei Raumtemperatur und ohne destillative Nachbehandlung durchzuführen.

Ganz besonders bevorzugt ist ein Verfahren zur Herstellung eines Hydroxysilans der Formel (I) durch die Umsetzung von 3,6-Dimethyl-1,4-dioxan-2,5-dion, insbesondere (3S,6S)-3,6-Dimethyl-1,4-dioxan-2,5-dion, mit einem Aminosilan der Formel (IV). Aus diesem Verfahren ist auf besonders einfache Weise unter milden Herstellbedingungen ein Hydroxysilan der Formel (I) mit sehr guter Lagerstabilität und sehr reaktiver Hydroxylgruppe zugänglich.

Das Hydroxysilan der Formel (I) kann Folgeprodukte aus der Hydrolyse und/oder Kondensation der Silangruppen enthalten, auch solche aus einer intra- oder intermolekularen Selbstkondensation mit der Hydroxylgruppe. Für gewisse Anwendungen können solche Folgeprodukte vorteihaft sein, beispielsweise für Haftvermittlerlösungen oder wässrige Vorbehandlungsmittel.

Ein weiterer Gegenstand der Erfindung ist eine silanfunktionelle Verbindung, erhalten aus der Umsetzung mindestens eines der vorgängig beschriebenen Hydroxysilane der Formel (I) mit mindestens einer Verbindung, die mindestens eine gegenüber Hydroxylgruppen reaktive Gruppe enthält.

Die Umsetzung wird insbesondere unter Ausschluss von Feuchtigkeit und den für die jeweilige Reaktivgruppe geeigneten Bedingungen durchgeführt.

Die gegenüber Hydroxylgruppen reaktive Gruppe ist bevorzugt ausgewählt aus der Gruppe bestehend aus Isocyanatgruppen, Epoxygruppen, Acrylatgruppen, Methacrylatgruppen, Anhydridgruppen, Carbonsäuregruppen, Estergruppen, Carbonatgruppen und Cyclocarbonatgruppen.

Davon bevorzugt sind Isocyanatgruppen, Anhydridgruppen, Estergruppen, Carbonatgruppen und Cyclocarbonatgruppen. Diese Reaktivgruppen sind mit dem Hydroxysilan der Formel (I) auf besonders einfache Weise umsetzbar. Am meisten bevorzugt sind Isocyanatgruppen. Silanfunktionelle Verbindungen aus der Umsetzung eines Hydroxysilans der Formel (I) mit einem Isocyanat sind besonders vorteilhaft verwendbar, insbesondere als Trocknungsmittel und/oder Haftvermittler und/oder feuchtigkeitshärtendes Bindemittel.

Silanfunktionelle Verbindungen aus der Umsetzung eines Hydroxysilans der Formel (I) mit einem Isocyanat weisen mindestens eine Silangruppe der Formel (V) auf.

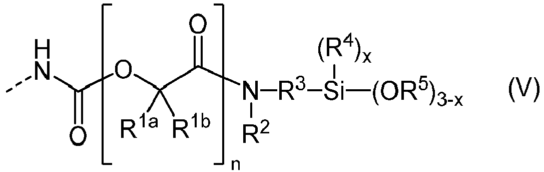

In der Formel (V) weisen R^{1a}, R^{1b}, R², R³, R⁴, R⁵, n und x die bereits genannten Bedeutungen auf.

Die Umsetzung des Hydroxysilans der Formel (I) mit dem Isocyanat wird bevorzugt bei einer Temperatur im Bereich von 20 bis 160 °C durchgeführt. Gegebenenfalls wird ein Katalysator eingesetzt, insbesondere ein tertiäres Amin oder eine Metallverbindung, insbesondere eine Bismut(III)-, Zink(II)-, Zirkonium(IV)- oder Zinn(II)-Verbindung oder eine Organozinn(IV)-Verbindung. Das Hydroxysilan der Formel (I) wird je nach Einsatzzweck der silanfunktionellen Verbindung in einem überstöchiometrischen, stöchiometrischen oder unterstöchiometrischen Verhältnis zu den Isocyanatgruppen eingesetzt.

Für den Einsatz der silanfunktionellen Verbindung als Haftvermittler wird das Hydroxysilan bevorzugt unterstöchiometrisch eingesetzt. Insbesondere wird dabei mit einem OH/NCO-Verhältnis im Bereich von 0.1 bis 0.5 gearbeitet. Für den Einsatz der silanfunktionellen Verbindung als feuchtigkeitshärtendes Bindemittel wird das Hydroxysilan bevorzugt stöchiometrisch oder leicht überstöchiometrisch eingesetzt. Insbesondere wird dabei mit einem OH/NCO-Verhältnis im Bereich von 1 bis 1.25 gearbeitet.

Für die Umsetzung mit einem Hydroxysilan der Formel (I) geeignete Isocyanate sind
- Isocyanatosilane, insbesondere 3-Isocyanatopropyltrimethoxysilan, 3-Isocyanatopropyltriethoxysilan, Isocyanatomethyltrimethoxysilan und Isocyanatomethyltriethoxysilan;
- aliphatische und cycloaliphatische und aromatische Monoisocyanate, insbesondere Butylisocyanat, Hexylisocyanat, Laurylisocyanat, Stearylisocyanat, Cyclohexylisocyanat und Phenylisocyanat;
- aliphatische, arylaliphatische und cycloaliphatische Di- und Triisocyanate, insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,3- und 1,4-Bis-(isocyanatomethyl)cyclohexan, m- und p-Xylylendiisocyanat (m- und p-XDI), Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat), bevorzugt HDI und IPDI,
- aromatische Di- und Triisocyanate, insbesondere 2,4- und/oder 2,6-Toluylendiisocyanat und beliebige Gemische dieser Isomeren (TDI), 4,4'-, 2,4'-und/oder 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diiso-cyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat, bevorzugt MDI und TDI;
- Oligomere und Derivate der genannten Di- und Triisocyanate, insbesondere abgeleitet von HDI, IPDI, MDI und TDI; insbesondere im Handel erhältliche Typen, insbesondere HDI-Biurete wie Desmodur^{®} N 100 und N 3200 (von Bayer), Tolonate^{®} HDB und HDB-LV (von Rhodia) und Duranate^{®} 24A-1 00 (von Asahi Kasei); HDI-Isocyanurate, wie Desmodur^{®} N 3300, N 3600 und N 3790 BA (alle von Bayer), Tolonate^{®} HDT, HDT-LV und HDT-LV2 (von Rhodia), Duranate^{®} TPA-1 00 und THA-1 00 (von Asahi Kasei) und Coronate^{®} HX (von Nippon Polyurethane); HDI-Uretdione wie Desmodur^{®} N 3400, Desmodur^{®} XP 2840 (von Bayer); HDI-Iminooxadiazindione wie Desmodur^{®} XP 2410 (von Bayer); HDI-Allophanate wie Desmodur^{®} VP LS 2102, Desmodur^{®} XP 2580 (von Bayer); IPDI-Isocyanurate, wie insbesondere in Lösung als Desmodur^{®} Z 4470 (von Bayer) oder in fester Form als Vestanat^{®} T1890/ 100 (von Evonik); TDI-Oligomere wie Desmodur^{®} IL (von Bayer); sowie gemischte Isocyanurate auf Basis TDI/HDI, zum Beispiel als Desmodur^{®} HL (von Bayer); weiterhin bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Bayer) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF); die genannten oligomeren Polyisocyanate stellen in der Praxis üblicherweise Gemische von Substanzen mit unterschiedlichen Oligomerisierungsgraden und/oder chemischen Strukturen dar, sie weisen bevorzugt eine mittlere NCO-Funktionalität von 2.1 bis 4.0 auf;
- weiterhin Isocyanatgruppen aufweisende Polymere, bevorzugt erhältlich aus der Umsetzung von mindestens einem Polyol mit mindenstens einem Polyisocyanat, wobei als Polyol bevorzugt Polyetherpolyole, Polyesterpolyole, Polycarbonatpolyole und Polyacrylatpolyole, besonders bevorzugt Polyetherpolyole, insbesondere Polyoxypropylenpolyole und Polyoxyethylenpolyoxypropylen-Mischpolyole, sowie Polyester- und Polycarbonatpolyole, insbesondere bei Raumtemperatur feste, kristalline oder amorphe Polyesterpolyole, verwendet werden, mit einem mittleren Molekulargewicht im Bereich von 500 bis 30'000 g/mol, bevorzugt 1000 bis 20'000 g/mol, insbesondere 2000 bis 15'000 g/mol, und wobei als Polyisocyanat bevorzugt die genannten Diisocyanate verwendet werden, bevorzugt MDI, TDI, HDI und IPDI, insbesondere IPDI.

Bevorzugte Isocyanate für die Umsetzung mit einem Hydroxysilan der Formel (I) sind ausgewählt aus der Gruppe bestehend aus Isocyanatosilanen, Diisocyanaten, deren Oligomeren und Derivaten, sowie Isocyanatgruppen aufweisenden Polymeren.

Besonders bevorzugte Isocyanate sind ausgewählt aus der Gruppe bestehend aus HDI, IPDI, MDI und TDI, sowie Oligomeren und Derivaten dieser Isocyanate, und von diesen Isocyanaten abgeleiteten Isocyanatgruppen aufweisenden Polymeren.

Eine besonders bevorzugte silanfunktionelle Verbindung mit mindestens einer Silangruppe der Formel (V) ist ein silanfunktionelles Polymer, welches vorteilhaft als Bindemittel für feuchtigkeitshärtende Zusammensetzungen verwendbar ist. Es wird insbesondere erhalten aus der Umsetzung eines Hydroxysilans der Formel (I) mit einem Isocyanatgruppen aufweisenden Polymer.

Ein solches silanfunktionelles Polymer weist bevorzugt 1 bis 4, besonders bevorzugt 1 bis 3, insbesondere 2 oder 3, endständige Silangruppen der Formel (V) auf. Bevorzugt ist es frei von Isocyanatgruppen.

Ein solches silanfunktionelles Polymer weist bevorzugt ein mittleres Molekulargewicht im Bereich von 1000 bis 30'000 g/mol, besonders bevorzugt 2000 bis 25'000 g/mol, insbesondere 3000 bis 20'000 g/mol, am meisten bevorzugt 4000 bis 15'000 g/mol, auf.

Ein bevorzugtes silanfunktionelles Polymer weist mehrheitlich Polyoxyalkyleneinheiten, insbesondere Polyoxypropyleneinheiten, auf. Seine Silangruppen der Formel (V) sind mehrheitlich an cycloaliphatische oder aromatische Reste gebunden, insbesondere an cycloaliphatische Reste abgeleitet von IPDI. Ein solches Polymer eignet sich insbesondere als Bestandteil von bei Raumtemperatur applizierbaren, elastischen Beschichtungen und elastischen Klebstoffen und/oder Dichtstoffen.

Ein weiteres bevorzugtes silanfunktionelles Polymer weist mehrheitlich Polyester- und/oder Polycarbonateinheiten, insbesondere Polyestereinheiten, auf und ist bei Raumtemperatur fest. Seine Silangruppen der Formel (V) sind mehrheitlich an cycloaliphatische oder aromatische Reste gebunden, insbesondere an aromatische Reste abgeleitet von MDI. Ein solches Polymer eignet sich insbesondere als Bestandteil von heiss applizierbaren Klebstoffen, sogenannten Heissschmelzklebstoffen.

Eine weitere besonders bevorzugte silanfunktionelle Verbindung mit mindestens einer Silangruppe der Formel (V) ist ein Isocyanatosilan der Formel (VI).

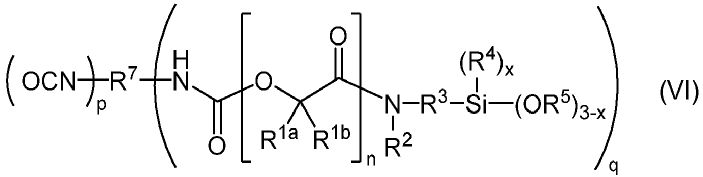

In der Formel (VI) stehen
R⁷ für einen (p+q)-wertigen Kohlenwasserstoffrest mit 4 bis 50 C-Atomen, welcher gegebenenfalls Carbodiimid-, Uretdion-, Allophanat-, Uretonimin-Biuret-, Iminooxadiazindion-, Isocyanurat- oder Urethangruppen enthält;
p für eine ganze Zahl von 1 bis 4;
q für 1 oder 2;
und R^{1a}, R^{1b}, R², R³, R⁴, R⁵, n und x weisen die bereits genannten Bedeutungen auf.

Ein Isocyanatosilan der Formel (VI) wird insbesondere erhalten aus der Umsetzung eines Hydroxysilans der Formel (I) mit einem aliphatischen, arylaliphatischen, cycloaliphatischen oder aromatischen Di- und Triisocyanat oder einem Oligomeren oder Derivaten davon.

Bevorzugt steht (p+q) für 2 oder 3.

Besonders bevorzugt stehen p und q jeweils für 1 und R⁷ steht für 1,6-Hexylen, 2,2,4- und/oder 2,4,4-Trimethyl-1,6-hexylen, 1,3- und/oder 1,4-Cyclohexylen, 1,3- und/oder 1,4-Xylylen, 1,3- und/oder 1,4-Tetramethylxylylen, 4,4'- und/oder 2,4'-substituiertes Diphenylmethan, 2,4- und/oder 2,6-substituiertes Toluol, IPDI nach Entfernung der zwei Isocyanatgruppen oder das Uretdion von HDI nach Entfernung der zwei Isocyanatgruppen. Davon bevorzugt ist IPDI nach Entfernung der zwei Isocyanatgruppen.

Weiterhin besonders bevorzugt stehen (p+q) für 3 und R⁷ steht für HDI-Biuret, HDI-Isocyanurat, IPDI-Isocyanurat, HDI-Iminooxadiazindion, HDI-Allophanat oder MDI-Uretonimin jeweils nach Entfernung der drei Isocyanatgruppen. Diese Isocyanatosilane stellen gut zugängliche, lagerstabile Substanzen dar. Besonders bevorzugte Isocyanatosilane der Formel (VI) sind ausgewählt aus der Gruppe bestehend aus 1-Oxo-1-((3-(triethoxysilyl)propyl)amino)-2-propyl ((5-isocyanato-1,3,3-trimethylcyclohexyl)methyl)carbamat; 1-Oxo-1-((3-(triethoxysilyl)propyl)amino)-2-propyl 3,5,5-trimethyl-3-(isocyanatomethyl)-cyclohexylcarbamat; 1-Oxo-1-((3-(triethoxysilyl)propyl)amino)-2-propyl 4-methyl-3-isocyanato-phenylcarbamat; 1-Oxo-1-((3-(triethoxysilyl)propyl)amino)-2-propyl 2-methyl-3-isocyanato-phenylcarbamat; sowie den entsprechenden Verbindungen mit Trimethoxysilyl- oder mit Dimethoxymethylsilylgruppen. Davon besonders bevorzugt sind die cycloaliphatischen Verbindungen. Sie weisen besonders gute Lagerstabilitäten auf.

Ein Isocyanatosilan der Formel (VI) ist besonders geeignet als Haftvermittler, insbesondere als Bestandteil einer Haftvermittlerlösung oder eines Primers, sowie als Zwischenprodukt zur Herstellung von silanfunktionellen Polymeren mit mindestens einer Silangruppe der Formel (V). Dafür geeignet sind insbesondere Isocyanatosilane, bei welchen p und q jeweils für 1 stehen. Sie können insbesondere mit handelsüblichen Polyolen zu silanfunktionellen Polymeren umgesetzt werden.

Ein weiterer Gegenstand der Erfindung ist die Verwendung eines Hydroxysilans der Formel (I) oder einer daraus hergestellten silanfunktionellen Verbindung als Bestandteil einer härtbaren Zusammensetzung. Das Hydroxysilan oder die daraus hergestellte silanfunktionelle Verbindung können dabei insbesondere als Trocknungsmittel und/ oder Haftvermittler und/oder als feuchtigkeitshärtendes Bindemittel wirken.

Die härtbare Zusammensetzung stellt dabei insbesondere eine Isocyanatgruppen aufweisende Polyurethanzusammensetzung, eine Epoxidharz-Zusammensetzung oder eine Silangruppen aufweisende Zusammensetzung dar.

Solche härtbare Zusammensetzungen können insbesondere als Vorbehandlungsmittel, insbesondere als Aktivator oder Primer, als Vergussmasse, Dichtstoff, Klebstoff, Belag, Beschichtung oder Anstrich in der Bau- und Fertigungsindustrie eingesetzt werden, insbesondere als Fugendichtstoff, Parkettklebstoff, Montageklebstoff oder Heissschmelzklebstoff.

Bevorzugt stellt die härtbare Zusammensetzung ein Vorbehandlungsmittel oder eine Beschichtung oder einen Dichtstoff oder einen Klebstoff dar.

Der Klebstoff stellt insbesondere einen elastischen oder einen (semi)strukturellen Klebstoff oder einen Heissschmelzklebstoff dar.

Ein Vorbehandlungsmittel, insbesondere ein Primer oder Aktivator, enthält typischerweise mindestens ein Lösemittel und optional weitere Bestandteile wie insbesondere Katalysatoren, weitere Silane, Titanate und Zirkonate und gegebenenfalls Füllstoffe, Netzmittel, Polyisocyanate, Isocyanat- und/oder Silangruppen aufweisende Polyurethanpolymere oder Epoxidharze.

Ein Dichtstoff oder ein elastischer oder (semi)struktureller Klebstoff enthält typischerweise mindestens ein feuchtigkeitshärtendes Bindemittel, insbesondere ein Isocyanatgruppen aufweisendes Polymer oder ein silanfunktionelles Polymer, und optional weitere Bestandteile wie insbesondere Katalysatoren, Füllstoffe, Weichmacher und Hilfsstoffe, insbesondere Verdicker.

Ein Heissschmelzklebstoff enthält typischerweise ein bei Raumtemperatur festes, feuchtigkeitsvernetzendes Polymer und optional weitere Bestandteile wie thermoplastische Harze und Polymere, Füllstoffe und Hilfsstoffe.

Die härtbare Zusammensetzung ist vorteilhaft verwendbar zum Beschichten oder Verkleben und/oder Abdichten von Substraten wie insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vorbehandelt sein, beispielsweise durch eine physikalische und/oder chemische Reinigung oder durch das Aufbringen eines Haftvermittlers, einer Haftvermittlerlösung oder eines Primers.

Aus den genannten Verwendungen des Hydroxysilans der Formel (I) oder einer daraus hergestellten silanfunktionellen Verbindung entsteht ein Artikel. Dieser Artikel stellt insbesondere ein Bauwerk des Hoch- oder Tiefbaus oder ein industrielles Gut oder ein Konsumgut dar.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

**¹H-NMR-Spektren** wurden in CDCl₃ auf einem Spektrometer des Typs Bruker Ascend 400 bei 400.14 MHz gemessen; die chemischen Verschiebungen δ sind angegeben in ppm relativ zu Tetramethylsilan (TMS), die Kopplungskonstanten J sind angegeben in Hz.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen; die Absorptionsbanden sind in Wellenzahlen (cm⁻¹) angegeben (Messfenster: 4000-650 cm⁻¹). Der Zusatz "sh" weist auf eine als Schulter erscheinende Bande hin.

**Gaschromatogramme** (GC) wurden gemessen im Temperaturbereich von 60 bis 320 °C mit einer Aufheizrate von 30 °C/min und 15 min Verweilzeit bei 320 °C. Die Injektortemperatur betrug 200 °C. Die Detektion erfolgte mittels Flammenionisation (FID), wobei die Signale via Flächenprozent-Methode ausgewertet wurden.

**Viskositäten** wurden auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

### 1. Herstellung von Hydroxysilanen

### Beispiel 1a: N-(3-Triethoxysilylpropyl)-2-hydroxypropanamid

In einem Rundkolben wurden 36.00 g (162.6 mmol) 3-Aminopropyltriethoxysilan, 12.07 g (83.7 mmol) L-Lactid und 0.15 g Vinyltriethoxysilan unter Stickstoffatmosphäre während 3 h bei 80 °C gerührt, bis mittels IR-Spektroskopie kein Reaktionsfortschritt mehr festgestellt wurde. Das Rohprodukt wurde während 15 Minuten bei 60 °C und ca. 10 mbar nachbehandelt. Es wurde ein flüssiges Produkt mit einem theoretischen OH-Equivalentgewicht von 293.4 g/Eq erhalten, welches unter Feuchtigkeitsausschluss bei Raumtemperatur aufbewahrt wurde.

**FT-IR:** 3406 sh (O-H), 3322 (N-H Amid), 2974, 2928, 2885, 2736, 1741 (C=O Ester), 1651 (C=O Amid), 1535 (C=O Amid), 1482, 1444, 1411, 1390, 1365, 1279, 1192, 1165, 1100, 1073, 996, 954, 886, 863, 775, 678.

**¹H-NMR:** δ 6.69 (s, 1 H, O=C-N*H*), 4.21 (q, 1 H, (R)₃C*H*, J = 6.8), 3.82 (q, 6 H, Si-O-C*H*₂-CH₃, J = 7.0), 3.28 (m, 2 H, NH-C*H*₂-CH₂-CH₂-Si), 1.65 (m, 2 H, NH-CH₂-C*H₂*-CH₂-Si), 1.42 (d, 3 H, C*H₃*-CH(R)₂, J = 6.8), 1.23 (t, 9 H, Si-O-CH₂-C*H₃*, J = 7.0), 0.65 (t, 2 H, NH-CH₂-CH₂-C*H₂*-Si, J = 8.1).

GC (3 Tage nach Herstellung): 96.2% N-(3-Triethoxysilylpropyl)-2-hydroxypropanamid, 1.7% 3-Aminopropyltriethoxysilan und 2.1% Milchsäureethylester. GC (6 Wochen nach Herstellung): 95.8% N-(3-Triethoxysilylpropyl)-2-hydroxypropanamid, 1.3% 3-Aminopropyltriethoxysilan und 2.9% Milchsäureethylester.

### Beispiel 1b: N-(3-Triethoxysilylpropyl)-2-hydroxypropanamid

In einem Rundkolben wurden 14.01 g (118.6 mmol) L-Milchsäureethylester, 10.00 g Ethanol und 0.15 g Vinyltriethoxysilan unter Stickstoffatmosphäre während 10 Minuten bei 60 °C gerührt. Dann wurden 25.00 g (112.9 mmol) 3-Aminopropyltriethoxysilan und 0.20 g Tytan^{®} TAA (Titanacetylacetonat; von Borica Company Ltd.) zugegeben und während 5 h bei 100 °C am Rückfluss gerührt, bis mittels IR-Spektroskopie kein Reaktionsfortschritt mehr festgestellt wurde. Das Rohprodukt wurde während 30 Minuten bei 80 °C und ca. 10 mbar nachbehandelt. Es wurde ein flüssiges Produkt mit einem theoretischen OH-Equivalentgewicht von 293.4 g/Eq erhalten, welches unter Feuchtigkeitsausschluss bei Raumtemperatur aufbewahrt wurde.
GC (3 Tage nach Herstellung): 80.4% N-(3-Triethoxysilylpropyl)-2-hydroxypropanamid, 19.6% 3-Aminopropyltriethoxysilan und < 0.1% Milchsäureethylester.

### Beispiel 2a: N-(3-Trimethoxysilylpropyl)-2-hydroxypropanamid

In einem Rundkolben wurden 16.21 g (90.4 mmol) 3-Aminopropyltrimethoxysilan, 6.20 g (43.05 mmol) L-Lactid und 0.10 g Vinyltrimethoxysilan unter Stickstoffatmosphäre während einigen Minuten bei 60 °C gerührt, bis aller Feststoff in Lösung war. Die Mischung wurde dann während 48 h unter Stickstoff bei 23 °C stehengelassen. Gemäss IR-Spektroskopie war die Reaktion abgeschlossen. Es wurde ein flüssiges Produkt mit einem theoretischen OH-Equivalentgewicht von 251.4 g/Eq erhalten.

**FT-IR:** 3410 sh (O-H), 3349 (N-H Amid), 2969, 2940, 2841, 1746 (C=O Ester), 1651 (C=O Amid), 1532 (C=O Amid), 1446, 1412, 1367, 1347, 1311, 1279, 1191, 1080, 1038, 963, 884, 864, 808, 776 sh, 677.

### Beispiel 2b: N-(3-Trimethoxysilylpropyl)-2-hydroxypropanamid

In einem Rundkolben wurden 12.34 g (118.6 mmol) L-Milchsäuremethylester, 10.00 g Methanol und 0.15 g Vinyltrimethoxysilan unter Stickstoffatmosphäre während 10 Minuten bei 60 °C gerührt. Dann wurden 20.25 g (112.9 mmol) 3-Aminopropyltrimethoxysilan und 0.20 g Tytan^{®} TAA zugegeben und während 6 h bei 90 °C am Rückfluss gerührt, bis mittels IR-Spektroskopie kein Reaktionsfortschritt mehr festgestellt wurde. Das Rohprodukt wurde während 30 Minuten bei 60°C und ca. 30 mbar nachbehandelt. Es wurde ein flüssiges Produkt mit einem theoretischen OH-Equivalentgewicht von 251.4 g/Eq erhalten.

### Beispiel 3: N-(3-Triethoxysilylpropyl)-2-hydroxyacetamid

In einem Rundkolben wurden 21.29 g (96.2 mmol) 3-Aminopropyltriethoxysilan, 5.47 g (47.1 mmol) 1,4-Dioxan-2,5-dion und 0.10 g Vinyltriethoxysilan unter Stickstoffatmosphäre während 2 h bei 100 °C gerührt, bis mittels IR-Spektroskopie kein Reaktionsfortschritt mehr festgestellt wurde. Das Rohprodukt wurde während 10 Minuten bei 40 °C und ca. 30 mbar nachbehandelt. Es wurde ein flüssiges Produkt mit einem theoretischen OH-Equivalentgewicht von 279.4 g/Eq erhalten.

**FT-IR:** 3418 sh (O-H), 3326 (N-H Amid), 2973, 2927, 2885, 2735, 1756 (C=O Ester), 1655 (C=O Amid), 1536 (C=O Amid), 1482, 1443, 1411, 1390, 1366, 1350, 1293, 1192, 1165, 1100, 1072, 953, 880, 849, 772, 680.

### Beispiel 4: N-(3-Trimethoxysilylpropyl)-2-hydroxyacetamid

In einem Rundkolben wurden 16.21 g (90.4 mmol) 3-Aminopropyltrimethoxysilan, 5.14 g (44.3 mmol) 1,4-Dioxan-2,5-dion und 0.10 g Vinyltrimethoxysilan unter Stickstoffatmosphäre während 2 h bei 100 °C gerührt, bis mittels IR-Spektroskopie kein Reaktionsfortschritt mehr festgestellt wurde. Das Rohprodukt wurde während 10 Minuten bei 40 °C und ca. 50 mbar nachbehandelt. Es wurde ein flüssiges Produkt mit einem theoretischen OH-Equivalentgewicht von 237.3 g/Eq erhalten.

**FT-IR:** 3414 sh (O-H), 3308 (N-H Amid), 2941, 2841, 1757 (C=O Ester), 1652 (C=O Amid), 1533 (C=O Amid), 1444, 1412, 1350, 1281, 1191, 1076, 892, 808, 771, 679.

### Beispiel 5: N-(3-Triethoxysilylpropyl)-2-hydroxy-2-methylpropanamid

In einem Rundkolben wurden 15.67 g (118.6 mmol) 2-Hydroxyisobuttersäureethylester und 0.15 g Vinyltriethoxysilan unter Stickstoffatmosphäre während 10 Minuten bei 60 °C gerührt. Dann wurden 25.00 g (112.9 mmol) 3-Aminopropyltriethoxysilan und 0.20 g Tytan^{®} TAA zugegeben und während 6 h bei 130 °C gerührt, bis mittels IR-Spektroskopie kein Reaktionsfortschritt mehr festgestellt wurde. Das Rohprodukt wurde während 30 Minuten bei 80 °C und ca. 10 mbar nachbehandelt. Es wurde ein flüssiges Produkt mit einem theoretischen OH-Equivalentgewicht von 307.5 g/Eq erhalten.

**FT-IR:** 3414 sh (O-H), 3349 (N-H Amid), 2973, 2926, 2881, 2735 sh, 1727 (C=O Ester), 1649 (C=O Amid), 1605 sh, 1533 (C=O Amid), 1465, 1446, 1390, 1359, 1344, 1280, 1240, 1163, 1101, 1077, 993, 953, 842, 777, 679.

### Beispiel 6: N-(3-Trimethoxysilylpropyl)-2-hydroxy-2-methylpropanamid

In einem Rundkolben wurden 14.00 g (118.6 mmol) 2-Hydroxyisobuttersäuremethylester und 0.15 g Vinyltrimethoxysilan unter Stickstoffatmosphäre während 10 Minuten bei 60 °C gerührt. Dann wurden 20.25 g (112.9 mmol) 3-Aminopropyltrimethoxysilan und 0.20 g Tytan^{®} TAA zugegeben und während 5 h bei 110 °C gerührt, bis mittels IR-Spektroskopie kein Reaktionsfortschritt mehr festgestellt wurde. Das Rohprodukt wurde während 30 Minuten bei 60 °C und ca. 30 mbar nachbehandelt. Es wurde ein flüssiges Produkt mit einem theoretischen OH-Equivalentgewicht von 265.4 g/Eq erhalten.

**FT-IR:** 3410 sh (O-H), 3353 (N-H Amid), 2969, 2940, 2840, 1746 (C=O Ester), 1650 (C=O Amid), 1609 sh, 1531 (C=O Amid), 1464, 1411, 1368, 1280, 1188, 1078, 1019, 969, 936, 909, 854, 804, 678.

### Beispiel 7: N-(n-Butyl)-N-(3-trimethoxysilylpropyl)-2-hydroxypropanamid

In einem Rundkolben wurden 23.55 g (100.1 mmol) N-(n-Butyl)-3-aminopropyltrimethoxysilan, 7.00 g (48.6 mmol) L-Lactid, 0.30 g Tytan^{®} TAA und 0.10 g Vinyltrimethoxysilan unter Stickstoffatmosphäre während 30 h bei 120 °C gerührt, bis mittels IR-Spektroskopie kein Reaktionsfortschritt mehr festgestellt wurde. Das Rohprodukt wurde während 30 Minuten bei 60 °C und ca. 10 mbar nachbehandelt. Es wurde ein flüssiges Produkt mit einem theoretischen OH-Equivalentgewicht von 307.5 g/Eq erhalten.

**FT-IR:** 3428 (O-H), 2936, 2873, 2840, 1754 (C=O Ester), 1708, 1640 (C=O Amid), 1535, 1459, 1411, 1371, 1316, 1279, 1190, 1081, 982, 880, 812, 777, 676.

### Beispiel 8: N,N-Bis(3-trimethoxysilylpropyl)-2-hydroxypropanamid

In einem Rundkolben wurden 34.17 g (100.1 mmol) N,N-Bis(3-trimethyoxysilylpropyl)amin, 7.00 g (48.6 mmol) L-Lactid, 0.30 g Tytan^{®} TAA und 0.10 g Vinyltrimethoxysilan unter Stickstoffatmosphäre während 30 h bei 120 °C gerührt, bis mittels IR-Spektroskopie kein Reaktionsfortschritt mehr festgestellt wurde. Das Rohprodukt wurde während 30 Minuten bei 60 °C und ca. 10 mbar nachbehandelt. Es wurde ein flüssiges Produkt mit einem theoretischen OH-Equivalentgewicht von 413.6 g/Eq erhalten.

**FT-IR:** 3436 (O-H), 2941, 2840, 1756 (C=O Ester), 1709, 1643 (C=O Amid), 1533, 1457, 1411, 1371, 1346, 1314, 1283, 1254, 1189, 1076, 984, 880, 808, 777,677.

### 2. Verwendung als Haftvermittler

### Beispiel 9:

1.0 Gewichts-% Hydroxysilan aus Beispiel **1a** wurde in absolutem Ethanol gelöst. Diese Lösung wurde als Aktivator (Haftvermittlerlösung) auf Glas verwendet. Dazu wurde eine Glasplatte (Floatglas; Firma Rocholl, Schönbrunn, Deutschland) mit den Massen 10 x 15 cm auf der Luftseite längsseitig so mit Distanzband-beklebt, dass drei Glasbahnen von je 2 x 13 cm erhalten wurden. Jede Bahn wurde mit Aceton gereinigt und anschliessend einmal mit einem mit dem hergestellten Aktivator benetzten Hygienetuch abgewischt. Nach einer Ablüftzeit von 2 h im NK wurde pro Bahn 7.8 g eines MDI-Polymers, dessen Herstellung nachfolgend beschrieben ist, in einer Schichtdicke von ca. 3 mm aufgetragen. Als Referenz wurde eine zweite Glasplatte identisch behandelt, wobei aber anstelle des Aktivators reiner Ethanol verwendet wurde. Die beiden Glasplatten wurden im NK aufbewahrt.

Nach 4 Tagen im NK war das MDI-Polymer vollständig durchgehärtet. Auf der nur mit Ethanol behandelten Referenzplatte liess sich das Polymer mit wenig Kraftaufwand vom Glasuntergrund wegziehen. Es wies keine gute Haftung auf dem Glas auf. Auf der mit dem Aktivator behandelten Platte konnte das ausgehärtete Polymer nicht vom Glasuntergrund abgezogen werden. Auch nach mehreren Schnitten quer zur Bahnrichtung bis auf den Glasuntergrund, mit welchen das Polymer vom Glas weggeschnitten wurde, und senkrecht nach oben gerichtetem Wegziehen der Polymerbahn liess sich das Polymer nicht vom Glasuntergrund lösen. Das Hydroxysilan aus Beispiel 1a im Aktivator hatte die Haftung des MDI-Polymers auf Glas entscheidend verbessert.

Das verwendete MDI-Polymer wurde hergestellt, indem unter Feuchtigkeitsausschluss 845 g Polyol Acclaim^{®} 4200 N (Polypropylenoxid-Diol, OH-Zahl 28.5 mg KOH/g, von Bayer) und 115 g 4,4'-Methylendiphenyldiisocyanat (MDI; Desmodur^{®} 44 MC L, von Bayer) nach bekanntem Verfahren bei 80 °C zu einem Polyurethanpolymer mit einem titrimetrisch bestimmten Gehalt an freien Isocyanat-Gruppen von 1.96 Gewichts-% umgesetzt wurden. Das Produkt wurde auf Raumtemperatur abgekühlt und unter Ausschluss von Feuchtigkeit aufbewahrt.

### 3. Verwendung zur Herstellung von silanfunktionellen Verbindungen

### Beispiel 10: (Herstellung eines Isocyanatosilans)

In einem Rundkolben wurden 8.00 g (27.3 mmol) Hydroxysilan aus Beispiel **1a**, 6.06 g (27.3 mmol) Isophorondiisocyanat (Vestanat^{®} IPDI, von Evonik) und 0.03 g Bismuttris(neodecanoat) (10 Gewichts-% in DIDP) unter Stickstoffatmosphäre während 4 h bei 80 °C gerührt und anschliessend 4 Tage unter Ausschluss von Feuchtigkeit bei Raumtemperatur aufbewahrt. Es wurde ein hochviskoses Produkt mit einem titrimetrisch bestimmten Gehalt an freien Isocyanatgruppen von 8.2 Gewichts-% erhalten.

**FT-IR:** 3436 sh, 3312 (N-H Amid), 3090, 2973, 2927, 2894, 2254 (N=C=O), 1704 (C=O Urethan), 1661 (C=O Amid), 1532 (C=O Amid), 1462, 1445, 1411, 1388, 1365, 1303, 1237, 1194, 1164, 1102, 1075, 955, 904, 857, 773.

### Beispiel 11: (Herstellung eines Isocyanatosilans)

In einem Rundkolben wurden 8.00 g (27.3 mmol) Hydroxysilan aus Beispiel **1a**, 4.74 g (27.3 mmol) 2,4-Toluylendiisocyanat (Desmodur^{®} T-100, von Bayer) unter Stickstoffatmosphäre während 4 h bei 80 °C gerührt und anschliessend 4 Tage unter Ausschluss von Feuchtigkeit bei Raumtemperatur aufbewahrt. Es wurde ein sehr hochviskoses Produkt mit einem titrimetrisch bestimmten Gehalt an freien Isocyanatgruppen von 6.5 Gewichts-% erhalten.

**FT-IR:** 3427 sh, 3295 (N-H Amid), 3099, 2974, 2927, 2885, 2267 (N=C=O), 1732 (C=O Urethan), 1658 (C=O Amid), 1617, 1596, 1537 (C=O Amid), 1445, 1413, 1387, 1367, 1306, 1276, 1221, 1165, 1099, 1074, 995, 953, 874, 767, 703, 677.

### Beispiel 12: (Herstellung eines silanfunktionellen Polymers)

In einem Rundkolben wurden 100.00 g eines *IPDI-Polyurethanpolymers* mit einem Gehalt von 0.63 Gewichts-% freien Isocyanatgruppen, dessen Herstellung nachfolgend beschrieben ist, mit 4.84 g des Hydroxysilans aus Beispiel 1a unter Stickstoffatmosphäre während 2 h bei 90 °C gerührt, bis mittels IR-Spektroskopie keine Isocyanatgruppen mehr nachweisbar waren. Das Polymer wurde auf Raumtemperatur abgekühlt und unter Ausschluss von Feuchtigkeit aufbewahrt.

Unter Ausschluss von Feuchtigkeit war das Polymer lagerstabil. Wurde es mit 2.5 Gewichts-% Tyzor^{®} IBAY (Bis(ethylacetoacetato)-diisobutoxy-titan(IV), von Dorf Ketal) versetzt und flächig in einer Schichtdicke von 2 bis 3 mm ausgegossen, so härtete es im Normklima innerhalb von 2 Wochen zu einem elastischen Material mit trockener Oberfläche.

Das verwendete *IPDI-Polyurethanpolymer* wurde hergestellt, indem unter Feuchtigkeitsausschluss 1000 g Polyol Acclaim^{®} 12200 (Polyoxypropylendiol mit niedrigem Ungesättigtheitsgrad, von Bayer; OH-Zahl 11.0 mg KOH/g), 43.6 g Isophorondiisocyanat (Vestanat^{®} IPDI, von Evonik), 126.4 g Diisodecylphthalat (DIDP) und 0.1 g Bismuttris(neodecanoat) (10 Gewichts-% in DIDP) unter stetigem Rühren auf 90 °C aufgeheizt und auf dieser Temperatur belassen wurden, bis der titrimetrisch bestimmte Gehalt an freien Isocyanatgruppen einen stabilen Wert von 0.63 Gewichts-% erreicht hatte. Das Produkt wurde auf Raumtemperatur abgekühlt und unter Ausschluss von Feuchtigkeit aufbewahrt.

### Beispiel 13: (Herstellung einer feuchtigkeitshärtenden Zusammensetzung)

15.00 Gewichtsteile (GT) des silanfunktionellen Polymers aus Beispiel 12 wurden mit 20.00 GT Diisodecylphthalat, 2.00 GT einer *Thixotropierpaste,* deren Herstellung nachfolgend beschrieben ist, 1.00 GT Vinyltriethoxysilan, 10.00 GT gefälltem Calciumcarbonat (Socal^{®} U1 S2 von Solvay), 50.00 GT gemahlenem Calciumcarbonat (Omyacarb^{®} 5 GU von Omya) und 1.25 GT Bis(ethylacetoacetato)-diisobutoxy-titan(IV) (Tyzor^{®} IBAY von Dorf Ketal) in einem Vakuummischer bei 50 °C unter Feuchtigkeitsausschluss während 30 Minuten zu einer homogenen Paste verarbeitet und aufbewahrt.

Die *Thixotropierpaste* wurde hergestellt, indem in einem Vakuummischer 300 g Diisodecylphthalat und 48 g 4,4'-Methylendiphenyldiisocyanat (Desmodur^{®} 44 MC L; von Bayer) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

Zur Bestimmung der Hautbildungszeit wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf Zugfestigkeit (Bruchkraft), Bruchdehnung und E-Modul geprüft.

Die Shore A-Härte wurde bestimmt nach DIN 53505 an während 2 Wochen im Normklima ausgehärteten Prüfkörpern.

Es wurden folgende Resultate erhalten:
Hautbildungszeit: 55 Minuten,
Zugfestigkeit: 1.50 MPa,
Bruchdehnung: 150%,
E-Modul (bei 0.5-50% Dehnung): 1.19 MPa,
Shore A: 38.

Als Mass für die Wärmebeständigkeit wurden einige Hanteln, bzw. der Shore A-Prüfkörper, anschliessend an die 2 Wochen im Normklima zusätzlich während 4 Wochen bei 100 °C in einem Umluftofen gelagert und anschliessend auf dieselbe Weise auf Zugfestigkeit, Bruchdehnung und E-Modul, bzw. auf Shore A-Härte, geprüft.

Nach dieser Wärmelagerung wurden folgende Resultate erhalten: Zugfestigkeit: 0.94 MPa,
Bruchdehnung: 125%,
E-Modul (bei 0.5-50% Dehnung): 0.77 MPa,
Shore A: 28.

Die feuchtigkeitshärtende Zusammensetzung aus Beispiel 13 ist insbesondere verwendbar als elastischer Klebstoff und/oder Dichtstoff.

## Patentansprüche

1. Hydroxysilan der Formel (I), 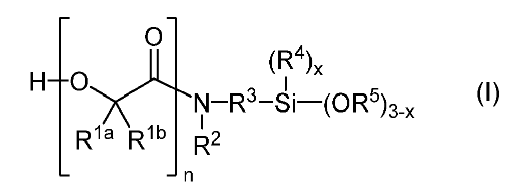 wobei
R^{1a} und R^{1b} unabhängig voneinander jeweils für ein Wasserstoffatom oder einen einwertigen Kohlenwasserstoffrest mit 1 bis 12 C-Atomen, oder zusammen für einen Alkylenrest mit 2 bis 6 C-Atomen, stehen;
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht;
R⁴ für einen Alkylrest mit 1 bis 8 C-Atomen steht;
R⁵ für einen Alkylrest mit 1 bis 10 C-Atomen, der gegebenenfalls Ethergruppen enthält, steht;
n für 1 oder 2 steht; und
x für 0, 1 oder 2 steht.

2. Hydroxysilan gemäss Anspruch 1, **dadurch gekennzeichnet, dass** R^{1a} und R^{1b} unabhängig voneinander jeweils für ein Wasserstoffatom oder einen Methylrest stehen.

3. Hydroxysilan gemäss einem der Ansprüche 1 oder 2, **dadurch gekennzeichnet, dass** R² für ein Wasserstoffatom oder einen Alkylrest oder einen Cycloalkylrest oder einen Alkoxysilylalkylrest steht.

4. Hydroxysilan gemäss einem der Ansprüche 1 bis 3, **dadurch gekennzeichnet, dass** R³ ausgewählt ist aus der Gruppe bestehend aus 1,3-Propylen, 4-Aza-1,6-hexylen, 2-Methyl-1,3-propylen, 1,4-Butylen, 3-Methyl-1,4-butylen und 3,3-Dimethyl-1,4-butylen.

5. Hydroxysilan gemäss einem der Ansprüche 1 bis 4, **dadurch gekennzeichnet, dass** R⁵ für einen Methylrest oder Ethylrest steht.

6. Hydroxysilan gemäss einem der Ansprüche 1 bis 5, **dadurch gekennzeichnet, dass** x für 1 oder 0, insbesondere für 0, steht.

7. Hydroxysilan gemäss einem der Ansprüche 1 bis 6, **dadurch gekennzeichnet, dass** es ausgewählt ist aus der Gruppe bestehend aus N-(3-Triethoxysilylpropyl)-2-hydroxyacetamid, N-(3-Trimethoxysilylpropyl)-2-hydroxyacetamid, N-(3-Diethoxymethylsilylpropyl)-2-hydroxyacetamid, N-(3-Dimethoxymethylsilylpropyl)-2-hydroxyacetamid, N-(3-Triethoxysilylpropyl)-2-hydroxypropanamid, N-(3-Trimethoxysilylpropyl)-2-hydroxypropanamid, N-(3-Diethoxymethylsilylpropyl)-2-hydroxypropanamid, N-(3-Dimethoxymethylsilylpropyl)-2-hydroxypropanamid, N-(3-Triethoxysilylpropyl)-2-hydroxy-2-methylpropanamid, N-(3-Trimethoxysilylpropyl)-2-hydroxy-2-methylpropanamid, N-(3-Diethoxymethylsilylpropyl)-2-hydroxy-2-methylpropanamid und N-(3-Dimethoxymethylsilylpropyl)-2-hydroxy-2-methylpropanamid.

8. Verfahren zur Herstellung eines Hydroxysilans gemäss einem der Ansprüche 1 bis 7, **dadurch gekennzeichnet, dass**
- mindestens ein Lactid der Formel (II) oder mindestens ein Hydroxyester der Formel (III) mit
- mindestens einem Aminosilan der Formel (IV) umgesetzt wird, 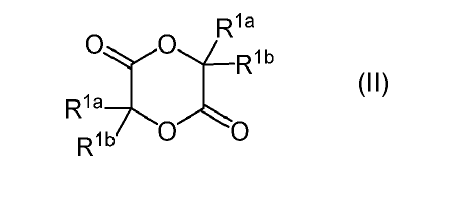 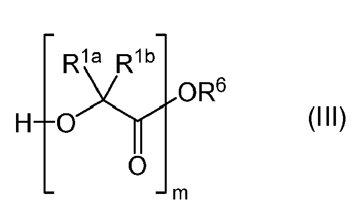 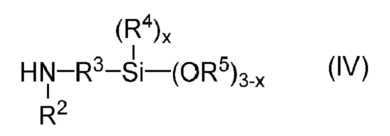 wobei
m für eine ganze Zahl von 1 bis 100; und
R⁶ für einen einwertigen Kohlenwasserstoffrest mit 1 bis 12 C-Atomen stehen.

9. Verfahren gemäss Anspruch 8, **dadurch gekennzeichnet, dass** es mit mindestens einem Lactid der Formel (II) durchgeführt wird.

10. Silanfunktionelle Verbindung, **dadurch gekennzeichnet, dass** sie aus der Umsetzung mindestens eines Hydroxysilans gemäss einem der Ansprüche 1 bis 7 mit mindestens einer Verbindung, die mindestens eine gegenüber Hydroxylgruppen reaktive Gruppe aufweist, erhalten wird.

11. Silanfunktionelle Verbindung gemäss Anspruch 10, **dadurch gekennzeichnet, dass** die gegenüber Hydroxylgruppen reaktive Gruppe ausgewählt ist aus der Gruppe bestehend aus Isocyanatgruppen, Epoxygruppen, Acrylatgruppen, Methacrylatgruppen, Anhydridgruppen, Carbonsäuregruppen, Estergruppen, Carbonatgruppen und Cyclocarbonatgruppen.

12. Silanfunktionelle Verbindung gemäss einem der Ansprüche 10 oder 11, **dadurch gekennzeichnet, dass** die Verbindung, die mindestens eine gegenüber Hydroxylgruppen reaktive Gruppe aufweist, ausgewählt ist aus der Gruppe bestehend aus Isocyanatosilanen, Diisocyanaten, deren Oligomeren und Derivaten, sowie Isocyanatgruppen aufweisenden Polymeren.

13. Verwendung eines Hydroxysilans gemäss einem der Ansprüche 1 bis 7 oder einer silanfunktionellen Verbindung gemäss einem der Ansprüche 10 bis 12 als Bestandteil einer härtbaren Zusammensetzung.

14. Verwendung gemäss Anspruch 13, **dadurch gekennzeichnet, dass** die härtbare Zusammensetzung ein Vorbehandlungsmittel oder eine Beschichtung oder einen Dichtstoff oder einen Klebstoff darstellt.

15. Artikel erhalten aus einer Verwendung gemäss einem der Ansprüche 13 oder 14.
